# EUROPEAN PATENT SPECIFICATION

(11) **EP 2 057 029 B1**
(45) Date of publication and mention of the grant of the patent: **17.11.2010**
(21) Application number: 06803493.3
(22) Date of filing: 13.09.2006
(51) Int. Cl.: B60K 15/077, F02M 37/02, F16K 7/12

(54) **RESERVOIR AND VALVE ASSEMBLY OF A FUEL DELIVERY MODULE**
BEHÄLTER UND VENTILANORDNUNG EINES KRAFTSTOFFZUFUHRMODULS
CUVE ET ENSEMBLE DE SOUPAPE DE MODULE DE DISTRIBUTION DE CARBURANT

(30) Priority: 31.08.2006 US 513231
(43) Date of publication of application: 13.05.2009
(73) Proprietor: Continental Automotive Systems US, Inc., Auburn Hills, MI 48326 (US)
(72) Inventor: BRIGGS, Paul F., Grand Blanc, Michigan 48439 (US); NEDEREGGER, Matthias, Rochester Hills, Michigan 48360 (US)
(74) Representative: Fischer, Michael
(86) International application number: PCT/US2006/035635
(87) International publication number: WO 2008/027061

(56) References cited:
- EP-A- 1 531 257
- US-A1- 2002 121 300

## Description

FIELD OF THE INVENTION

The invention relates to automotive fuel delivery modules and, more particularly, to a fill valve structure that opens due to a vacuum created by a jet pump so that fuel in a fuel tank is drawn into a reservoir of the module.

BACKGROUND OF THE INVENTION

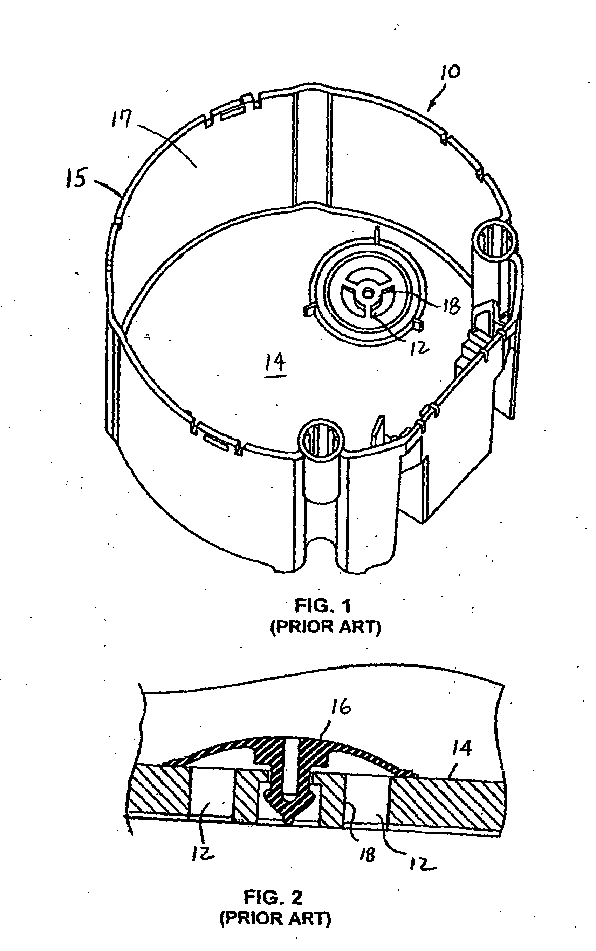

US2002/0121300A discloses a liquid fuel trap with a valve which is related to the preamble of claim 1. EP 1531257A discloses a reservoir of fuel delivery module that has a valve protection structure. A fuel delivery module is a device inside a fuel tank that allows a vehicle to perform under conditions when low fuel remains in the fuel tank. With reference to FIG. 1, the module includes a conventional reservoir, generally indicated at 10, having a cylindrical wall 15 defining an interior space 17. The reservoir 10 is kept continuously full by, for example, a conventional jet pump (not shown) even when the remainder of the fuel tank is nearly empty. For these devices to function properly, an opening 12 in the bottom 14 of the reservoir 10 is typically provided to allow fuel to flow from the tank into the interior of reservoir 10. When the vehicle is turned off, this opening 12 must be closed to contain fuel in the reservoir. 10 so that a fuel pump (not shown) disposed in the reservoir 10 can receive fuel when the vehicle is restarted. As shown in FIG. 2, a conventional umbrella-shaped elastomer valve 16 is mounted to a boss 18 and is used to close the opening 12 to keep the fuel from back-flowing from the reservoir 10. To fill the reservoir with fuel, the valve 16 moves upwardly due to a vacuum created by the jet pump, permitting fuel to pass through the opening 12.

A second valve 16 (not shown) can be provided in the reservoir 10 for use in filling the reservoir for the first time (e.g., initial fill for a new vehicle).

Although the valve 16 is effective, there is a need to reduce the cost of the valve and thus reduce the overall cost of a fuel module.

SUMMARY OF THE INVENTION

An object of the invention is to fulfill the need referred to above. In accordance with the principles of the present invention, this objective is achieved by providing a reservoir and valve assembly for sealing an opening in a reservoir of a fuel delivery module. The reservoir is constructed and arranged to be mounted with respect to a bottom of a fuel tank of a vehicle. The reservoir has wall structure coupled with a bottom to define an interior space. The bottom has the opening therein. The valve seal structure includes reservoir surface feature structure disposed about a periphery of the opening in the reservoir and extending upwardly from the bottom of the reservoir. A valve is associated with the opening and includes valve surface feature structure extending towards the reservoir surface feature structure. A seal member is disposed between the reservoir surface feature structure and the valve surface feature structure. The seal member, under certain pressure conditions, permits fuel contained in the fuel tank to flow into the reservoir and, under pressure conditions different from the certain pressure conditions, prevents fuel in the reservoir from flowing back to the fuel tank via the at least one opening by defining a seal between the reservoir surface feature structure and the valve surface feature structure._The reservoir surface feature structure is a single annular reservoir bump and the valve surface feature structure is a pair of annular valve bumps disposed in spaced relation, the single reservoir bump being disposed along an axis that is between the pair of valve bumps.

Other objects, features and characteristics of the present invention, as well as the methods of operation and the functions of the related elements of the structure, the combination of parts and economics of manufacture will become more apparent upon consideration of the following detailed description and appended claims witch reference to the accompanying drawings, all of which form a part of this specification.

BRIEF DESCRIPTION OF THE DRAWINGS

The invention will be better understood from the following detailed description of the preferred embodiments thereof, taken in conjunction with the accompanying drawings, wherein like reference numerals refer to like parts, in which:

FIG. 1 is a view of the inside of a conventional reservoir of a fuel delivery module showing an opening in a bottom thereof for fuel to pass there through.

FIG. 2 sectional view of a conventional valve associated with the opening in the reservoir of FIG. 1.

FIG. 3 is a partial sectional view of a reservoir valve seal structure provided in accordance with the principles of the present invention.

FIG. 4 is an enlarged view of the portion encircled at A in FIG. 3, but shown in a sealing position.

DETAILED DESCRIPTION OF THE EXEMPLARY EMBODIMENT

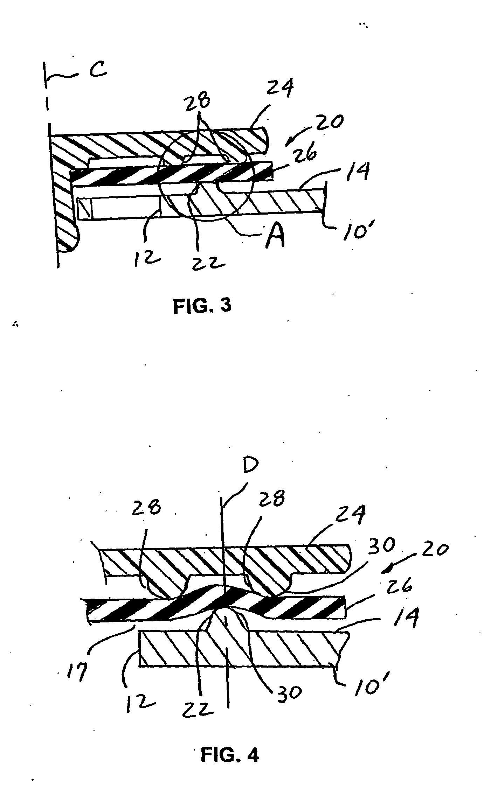

With reference to FIG. 3, a partial sectional view of a reservoir valve seal structure is shown, generally indicated at 20, in accordance with the principles of the invention. It can be appreciated that the valve seal structure shown in FIG. 3 is symmetrical about centerline C. Thus, only half of the valve seal structure 20 is shown in FIG. 3.

A reservoir 10' is provided and is part of a fuel delivery module for a vehicle and is mounted within a fuel tank (not shown) of the vehicle. A fuel pump (not shown) is typically provided in the reservoir 10' to supply fuel to an engine of the vehicle in the conventional manner. The reservoir 10' is similar to that shown in FIG. 1 and thus includes the generally cylindrical wall structure that is joined with a bottom 14 to define an inferior space 17. An opening 12 is provided in the bottom 14 of the reservoir 10' to permit fuel from a fuel tank to enter the reservoir 10'. A surface feature, preferably in the form of an annular reservoir bump 22, is provided about a periphery of the opening 12, and defines part of the valve seal structure 20 as will be explained below. The reservoir bump 22 extends upwardly from the bottom 14 of the reservoir 10'.

A reservoir valve 24, preferably of plastic material, is mounted with respect to the opening 12 in a conventional manner similar to that shown in FIG. 2 with regard to valve 16. The valve 24 includes a seal member preferably in the form of an annular elastomer seal disk 26 coupled therewith. The valve 24 also includes surface features, preferably in the form of a pair of annular valve bumps 28 disposed in spaced relation and extending downwardly or towards the reservoir bump 22. The reservoir bump 22 is disposed along an axis D between the valve bumps 28.

A fuel pump operates a jet pump (not shown) that draws fuel from the tank into the reservoir 10' to ensure that the reservoir 10' is replenished with fuel in the conventional manner. The jet pump includes a venturi tube associated with a nozzle in the conventional manner to create a vacuum and draw fuel past the seal disk 26 (e.g., over reservoir bump 22) and into the reservoir 10'. When the vacuum is released, the seal disk 26 is sealed between the bumps 22 and 28. More particularly, with reference to FIG. 4, when the vacuum is released, the valve seal structure 20 moves such that the seal disk 26 is sandwiched (engaged) between the reservoir bump 22 and the valve bumps 28 defining a seal and preventing back flow of fuel through the opening 12 to the tank, for example, when the vehicle is turned off. Thus, no fuel can pass the surface features in the form of bumps 22 and 28. The seal disk 26 is preferably 60-70 durometer fluorosilicone, but other forms of elastomer may be used.

Each of the reservoir bump 22 and the valve bumps 28 has a generally rounded engagement surface 30 that engages the seal disk 26.

Another seal valve structure 20 can be provided to define a first fill valve structure to keep fuel inside reservoir 10' from leaking into the tank, and to allow fuel to enter reservoir 10' when the system has not been previously primed (i.e., new vehicle, after fuel system service, etc.).

The seal valve structure 20 thus provides a low-cost, yet highly reliable seal structure since a tighter seal bead is formed with respect to the reservoir 10' than would normally be formed using only a flat disk without the bump surface features 22 and 28. In addition, the seal disk 26 can still function under looser tolerance control.

It can be appreciated that the reservoir 10' can include the pair of bumps, with the valve 24 having the single bump. Also the bumps 22, 28 can be made integral with or attached to the associated reservoir or valve.

The foregoing preferred embodiments have been shown and described for the purposes of illustrating the structural and functional principles of the present invention, as well as illustrating the methods of employing the preferred embodiments and are subject to change without departing from such principles.

## Claims

1. A reservoir and valve assembly of a fuel delivery module, comprising:
a reservoir (10') constructed and arranged to be mounted with respect to a bottom of a fuel tank of a vehicle, the reservoir (10') having wall structure (15) coupled with a bottom (14) to define an interior space (17), the bottom (14) having the opening (12), the reservoir (10') having reservoir surface feature structure (22) about a periphery of the opening (12) and extending upwardly from the bottom (14) of the reservoir; and
a valve (24) associated with the opening (12), the valve (24) including valve surface feature structure (28) extending towards the reservoir surface feature structure (22), and a seal member (26) between the valve surface feature structure (28) and the reservoir surface feature structure (22), the seal member (26) being constructed and arranged, under certain pressure conditions, to permit fuel contained in the fuel tank to flow into the reservoir (10') and, under pressure conditions different from the certain pressure conditions, to prevent fuel in the reservoir (10') from flowing back to the fuel tank via the at least one opening (12) by defining a seal between the reservoir surface feature structure (22) and the valve surface feature structure (28);
**characterize in that**
the reservoir surface feature structure (22) is a single annular reservoir bump (22) and the valve surface feature structure (28) is a pair of annular valve bumps (28) disposed in spaced relation, the single reservoir bump (22) being disposed along an axis that is between the pair of valve bumps (28).

2. The assembly of claim 1, wherein the seal member is an elastomer disk (26).

3. The assembly of claim 2, wherein the elastomer disk (26) is made of fluorosilicone.

4. The assembly of claim 1, wherein the reservoir bump (22) and the valve bumps (28) each has a generally rounded engagement surface that engages the seal member (26).

## Patentansprüche

1. Vorratsbehälter- und Ventilbaugruppe eines Kraftstoffzufuhrmoduls, die Folgendes umfasst:
einen Vorratsbehälter (10'), der so konstruiert und
angeordnet ist, dass er bezüglich eines Bodens eines Kraftstofftanks eines Fahrzeugs befestigt werden kann, wobei der Vorratsbehälter (10') eine mit einem Boden (14) verbundene Wandkonstruktion (15) aufweist, wodurch ein Innenraum (17) abgegrenzt wird, wobei der Boden (14) die Öffnung (12) und der Vorratsbehälter (10') das sich um einen Umfang der Öffnung (12) herum vom Boden (14) des Vorratsbehälters aus nach oben erstreckende Vorratsbehälter-Oberflächenstrukturmerkmal (22) aufweist,
und
ein zu der Öffnung (12) gehörendes Ventil (24) mit einem Ventil-Oberflächenstrukturmerkmal (28), das sich zu dem Vorratsbehälter-Oberflächenstrukturmerkmal (22) hin erstreckt, und einem Dichtungselement (26) zwischen dem Ventil-Oberflächenstrukturmerkmal (28) und dem Vorratsbehälter-Oberflächenstrukturmerkmal (22), wobei das Dichtungselement (26) so konstruiert und angeordnet ist, dass es unter bestimmten Druckbedingungen Kraftstoff aus dem Kraftstofftank in den Vorratsbehälter (10') strömen lässt und unter anderen als den bestimmten Druckbedingungen Kraftstoff in dem Vorratsbehälter (10') daran hindert, über die mindestens eine Öffnung (12) zurück in den Kraftstofftank zu strömen, indem es zwischen dem Vorratsbehälter-Oberflächenstrukturmerkmal (22) und dem Ventil-Oberflächenstrukturmerkmal (28) eine Dichtung definiert,
**dadurch gekennzeichnet, dass**
es sich bei dem Vorratsbehälter-Oberflächenstrukturmerkmal (22) um einen einzelnen ringförmigen Vorratsbehälterhöcker (22) und bei dem Ventil-Oberflächenstrukturmerkmal (28) um zwei in einem Abstand voneinander angeordnete ringförmige Ventilhöcker (28) handelt, wobei der einzelne Vorratsbehälterhöcker (22) an einer Achse entlang angeordnet ist, die zwischen den beiden Ventilhöckern (28) verläuft.

2. Baugruppe nach Anspruch 1, bei der es sich bei dem Dichtungselement um eine Elastomerscheibe (26) handelt.

3. Baugruppe nach Anspruch 2, bei der die Elastomerscheibe (26) aus Fluorsilikon besteht.

4. Baugruppe nach Anspruch 1, bei der der Vorratsbehälterhöcker (22) und die Ventilhöcker (28) jeweils eine allgemein abgerundete Eingriffsfläche aufweisen, die in das Dichtungselement (26) greift.

## Revendications

1. Ensemble de cuve et soupape d'un module de distribution de carburant comprenant :
une cuve ( 10' ) construite et agencée pour être montée par rapport à un fond d'un réservoir de carburant d'un véhicule,
la cuve ( 10' ) ayant une structure ( 15 ) de paroi couplée à un fond ( 14 ) pour définir un espace ( 17 ) intérieur, le fond ( 14 ) ayant une ouverture ( 12 ), la cuve ( 10' ) ayant une structure ( 22 ) de caractéristique de surface de réservoir et une périphérie s'étendant vers le haut à partir du fond ( 14 ) de la cuve ; et
une soupape ( 24 ) associée à l'ouverture ( 12 ), la soupape ( 24 ) comprenant une structure ( 28 ) de caractéristique de surface de soupape s'étendant vers la structure ( 22 ) de caractéristique de surface de cuve, un élément ( 26 ) d'étanchéité entre la structure ( 28 ) de caractéristique de surface de soupape et la structure ( 22 ) de caractéristique de surface de réservoir, l'élément ( 26 ) d'étanchéité étant construit et agencé pour, dans certaines conditions de pression, permettre à du carburant de s'écouler dans la cuve ( 10' ) et pour, dans des conditions de pression différentes des certaines conditions de pression, empêcher du carburant dans la cuve ( 10' ) de revenir au réservoir de carburant en passant par la au moins une ouverture ( 12 ) en définissant un joint entre la structure ( 22 ) de caractéristique de surface de la cuve et la structure ( 28 ) de caractéristique de surface de la soupape ;
**caractérisé en ce que**
la structure ( 22 ) de caractéristique de surface de la cuve est une bosse ( 22 ) annulaire unique de cuve et la structure ( 28 ) de caractéristique de surface de soupape est une paire de bosses ( 22 ) annulaires de soupape disposée à distance, la bosse ( 22 ) unique de cuve étant disposée le long d'un axe qui est entre la paire de bosses ( 28 ) de soupape.

2. Ensemble suivant la revendication 1, dans lequel l'élément d'étanchéité est un disque ( 26 ) élastomère.

3. Ensemble suivant la revendication 2, dans lequel le disque ( 26 ) élastomère est en fluorosilicone.

4. Ensemble suivant la revendication 1, dans lequel la bosse ( 22 ) de cuve et les bosses ( 28 ) de soupape ont chacune une surface de coopération généralement arrondie, qui coopère avec l'élément ( 26 ) d'étanchéité.
